# EUROPEAN PATENT APPLICATION

(11) **EP 3 275 622 A2**
(43) Date of publication of application: **31.01.2018**
(21) Application number: 17179518.0
(22) Date of filing: 04.07.2017
(51) Int. Cl.: B29C 53/82, B65D 85/676

(54) **COIL AND METHOD FOR MANUFACTURING SUCH COIL**

(30) Priority: 28.07.2016 IT 201600079184
(71) Applicant: Nest S.r.l., 60044 Fabriano (AN) (IT)
(72) Inventor: BARBADORO, Antonio, 61047 San Lorenzo in Campo (PU) (IT)
(74) Representative: Santonicola, Paolo

(57) **Abstract**

The object of the present invention is a coil (10). Such coil (10) comprises a first flange (12) and a second flange (11) suitably spaced from each other. A filament (100) is arranged between the flanges in the form of a winding. Containing means are applied between the flanges and are arranged outside the filament winding (100), in a manner such that the filament (100) can be unwound inside the winding thereof. Another object of the present invention is the method for producing such coil (10) which makes use of a core (77) that can be removed for creating the filament winding (100). Since the coil (10) in one embodiment thereof is configured for being used for the three-dimensional printing of objects, a further object of the present invention is a system comprising such coil (10) and a device for the three-dimensional printing of objects.

## Description

The object of the present invention is a coil, a method for producing such coil, and a system comprising such coil and a device for the three-dimensional printing of objects.

By 3D printing it is intended the physical making of three-dimensional objects starting from computerized digital models. The 3D printing of objects typically occurs by means of additive production, i.e. by means of superimposition of a series of filament layers. Among the possible methods of 3D printing, one of those most commonly used today is the FFF (Fused Filament Fabrication) method, in which a filament made of plastic material, once unrolled from a coil, is treated by an extruding head which first heats, then extrudes and after this deposits the material. The material exits fused from the extrusion nozzle and is then deposited on an abutment table. Since both the nozzle and the table are movable, and since their movements can be controlled by means of a dedicated application, it is possible to obtain the desired geometry of the three-dimensional objects by tracing in accordance with the paths of the nozzle and table.

The three-dimensional printing devices have an overly complex architecture, in particular regarding the means for moving the filament. Indeed, the filament is unrolled from the coil at a distance from the extruding head and must therefore be made taut by means of a thread tensioner so as to be able to reach the extruding head with suitable tension and speed.

The control of the thread tensioner is quite problematic. Indeed, since the coil is in fixed position and the extruding head is instead movable, the traction exerted by the thread tensioner must vary as a function of the position of the extruding head. Finally, the vulnerability of the abovementioned architecture cannot be underestimated, regarding possible breakage, work hardening, tearing and jamming of the filament.

The document DE2032247A1 describes a coil in which a wire winding is present for welding around a core made of cardboard, such core being removable in order to allow the wire to be extracted from the interior. The configuration of such coil, however, makes it entirely unsuitable for being used in the technical field of three-dimensional printing of objects, which among other things represents a technical field clearly quite different from the technical field of welding machines.

One object of the present invention is to resolve the abovementioned drawbacks. In particular, an object of the present invention is to considerably simplify the architecture of the devices for the three-dimensional printing of objects.

Another object of the present invention is to ensure that a device for the three-dimensional printing of objects can be simply controlled and that it always ensures an optimal pulling of the filament, thus considerably limiting the risks of breakage, work hardening, tearing or jamming.

Another object of the present invention is to contribute to the optimization of the number of components employed in a device for three-dimensional printing, thus making it competitive also from a costs standpoint.

Finally, another object of the present invention is to provide for a coil arranged to be used in combination with a device for three-dimensional printing in additive FFF (Fused Filament Fabrication) technology which is simple and inexpensive in the production method and which is reliable when in use.

The objects of the present invention are intended to be attained by means of a method for producing a coil, in which a first flange is arranged at a predetermined distance from a second flange. Then, provision is made for inserting a core between the first flange and the second flange.

A filament is then rolled around the core, in order to form a winding of the filament between the first flange and the second flange. Containing means are then applied between the first flange and the second flange, in a manner such that the filament remains interposed between the core and the containing means. Finally, provision is made for removing the core between the first flange and the second flange.

The objects of the present invention are intended to be attained also by means of a coil comprising a first flange, a second flange arranged at a predetermined distance from the first flange and a filament wound between the first flange and the second flange. According to the invention, the coil further comprises containing means (comprising for example a sheath) applied between the first flange and the second flange and arranged outside the winding of the filament, such that the filament can be unwound inside the winding.

Finally, the objects of the present invention are intended to be attained by means of a device for the three-dimensional printing of objects (possibly in combination with a coil to form a system for the three-dimensional printing of objects), functioning according to the additive FFF (Fused Filament Fabrication) technology and equipped with an extruding head comprising a supplying conduit, adapted to receive a filament when the device is used in combination with a coil. According to the invention, the extruding head further comprises a supporting surface, adapted to allow the coil to be maintained in position and to rotate around the axis of the supplying conduit during the extrusion of the filament.

Now, by way of a non-limiting example, the description is reported of preferred but non-exclusive embodiments of a method for producing a coil according to the present invention, of a coil according to the present invention and of a device for the three-dimensional printing of an object according to the present invention, presented hereinbelow with reference to the enclosed drawings, in which:
- figures 1a to 1e represent a sequence of steps implemented during the method for producing a coil according to the present invention;
- figure 2 is a section view of a coil according to the present invention and
- figure 3 is a section view of a detail of a device for the three-dimensional printing of an object according to the present invention, in combination with a coil according to the present invention.

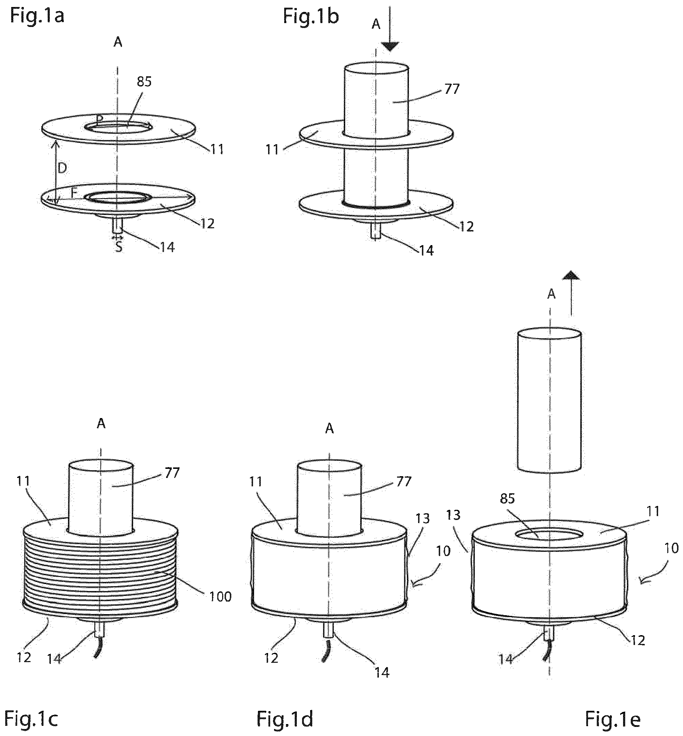

The sequence represented in figures 1a to 1e schematically illustrates the method according to the present invention for producing a coil. The coil obtained by means of such method is particularly well-suited for being used in combination with a device for three-dimensional printing in additive FFF (Fused Filament Fabrication) technology. Nevertheless, the invention is not intended to be limited in such sense, since the possible uses of a coil obtained by means of the method pursuant to figures 1a to 1e can also be different from that of a coil for three-dimensional printing devices. Merely by way of a non-limiting example, the coil according to the invention can be used in combination with a welding machine.

The general idea underlying the production method according to the invention is that of obtaining, once the method is completed, a coil comprising a wound filament, wherein the unwinding of the filament (necessary for example for feeding material to be extruded to the printing head of a device for the three-dimensional printing of objects) can occur inside the winding, rather than outside as normally occurs. In such a manner, the coil can be coupled with devices (for example with printing heads) substantially coaxial with the coil itself, and such devices can receive the filament directly from the coil, without the interposition of intermediate devices such as thread tensioner means.

In order to obtain a configuration of the coil that is in accordance with the general idea described above, elements are used that then remain included in the coil itself (such elements in particular being a first flange, a second flange, a filament and containing means), and an element is also used that is instead removed from the coil before the conclusion of the production method (the core around which the winding of the filament occurs).

In figure 1a, a first flange 12 is arranged at a predetermined distance D from a second flange 11, the distance D variable as a function of the quantity of filament 100 that one wishes to wind, in a manner so as to define the height of the winding of the filament inside the coil. Preferably the first flange 12 and the second flange 11 are substantially parallel to and substantially coaxial with each other. Preferably the first flange 12 and the second flange 11 both have axially symmetric form (the symmetry axis being indicated with A) and substantially have equal external diameter F. Advantageously, the first flange 12 comprises a dispensing conduit 14, while the second flange 11 comprises an opening 85, the dispensing conduit 14 and the opening 85 preferably being substantially coaxial with each other. The diameter P of the opening 85 is at least one order of magnitude greater than the diameter S of the dispensing conduit 14.

In figure 1b, a core 77 is inserted between the first flange 12 and the second flange 11. Preferably, the core 77 comprises a cylindrical body having height at least equal to the distance D between the first flange 12 and the second flange 11 and diameter slightly smaller than the diameter P of the opening 85 of the second flange 11. The insertion of the core 77 advantageously occurs through the opening 85, along the direction of the axis A.

In figure 1c, a filament 100 is wound around the core 77, in order to form a winding of the filament 100 between the first flange 12 and the second flange 11. Preferably the winding comes to occupy the volume comprised between the first flange 12 and the second flange 11, without significantly going beyond the external diameter F of the flanges. Advantageously, before proceeding with the winding around the core 77, an end of the filament 100 is inserted in the dispensing conduit 14, such that the filament 100, once the method for producing the device 1 has terminated, can then be unrolled via pulling exerted on such end.

After the filament 100 has been wound to the desired length, preferably such to create a compact pack that fills the volume comprised between the first flange 12 and the second flange 11, the filament 100 is cut, thus terminating the winding step.

In figure 1d, containing means are applied between the first flange 12 and the second flange 11, in a manner such that the filament 100 remains interposed between the core 77 and the containing means. The containing means have the function of preventing the winding of the filament 100 from losing its compactness and thus as a consequence preventing the increase of bulk of the coil 10. Simultaneously, the containing means confer stability to the structure of the coil 10 during use, thus maintaining the second flange 11 at suitable distance from the first flange 12 until the filament 100 is fully used.

In figure 1d, the containing means are represented in the form of a sheath 13 capable of containing the bulk of the filament 100, for example a thermoshrinkable film or a vacuum shrinkable film or an adhesive strip. Such sheath 13 can be made of plastic material or of metallic material, e.g. of a non-ferrous metal.

In a different embodiment of the invention, the containing means comprise at least one rigid body, for example at least one casing and/or at least one shell and/or at least one shell portion, preferably at least one half-shell. Once the winding of the filament 100 is completed, such rigid body is applied to the external covering of the filament 100, for the purpose of containing the bulk of the winding. In a further embodiment of the invention, the containing means comprise a flexible body, optionally at least one elastic hook and/or at least one elastic strip and/or at least one elastic sleeve. Also such flexible body is applied to the external covering of the filament 100 once the winding of the filament 100 has completed.

Advantageously, the containing means are at least partly made of transparent material, in order to provide the user of the coil 10 the possibility to monitor the available quantity of filament 100. Alternatively, an inspection window is made in the containing means in order to allow such monitoring.

The containing means can be applied to the coil 10 such that they remain in direct contact with the winding of the filament 100. Alternatively (especially in the case of application of a sheath 13 made of thermoshrinkable material, in order to prevent the relatively high temperature of the sheath 13 from deteriorating the filament 100), the step of applying the containing means can be preceded by a step of applying filling means made of insulating material, in particular of thermally insulating material. In such case, provision is first made for applying the filling means to the external covering of the filament 100, and then for applying the containing means to the filling means, such that the latter remain stably interposed between the containing means and the winding.

In figure 1e, the method according to the invention for producing a coil terminates with the removal of the core 77, which advantageously occurs through the opening 85 of the second flange 11, along the direction of the axis A (the movement of the core 77 in the removal step therefore occurs in the same direction as the movement of the core 77 in the insertion step, but in opposite sense). Once the core 77 is removed, the volume previously engaged by the core 77 remains free, thus allowing the unwinding of the filament 100 inside the winding of the filament 100.

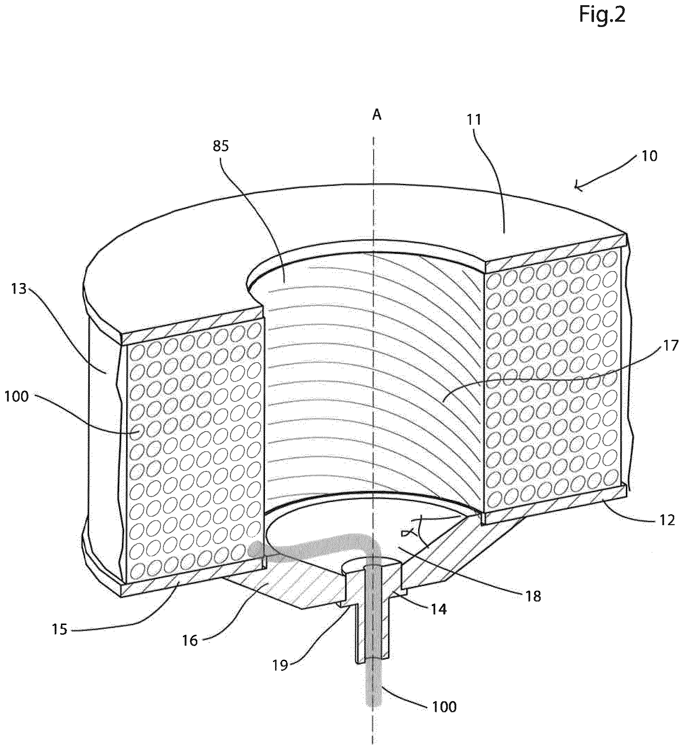

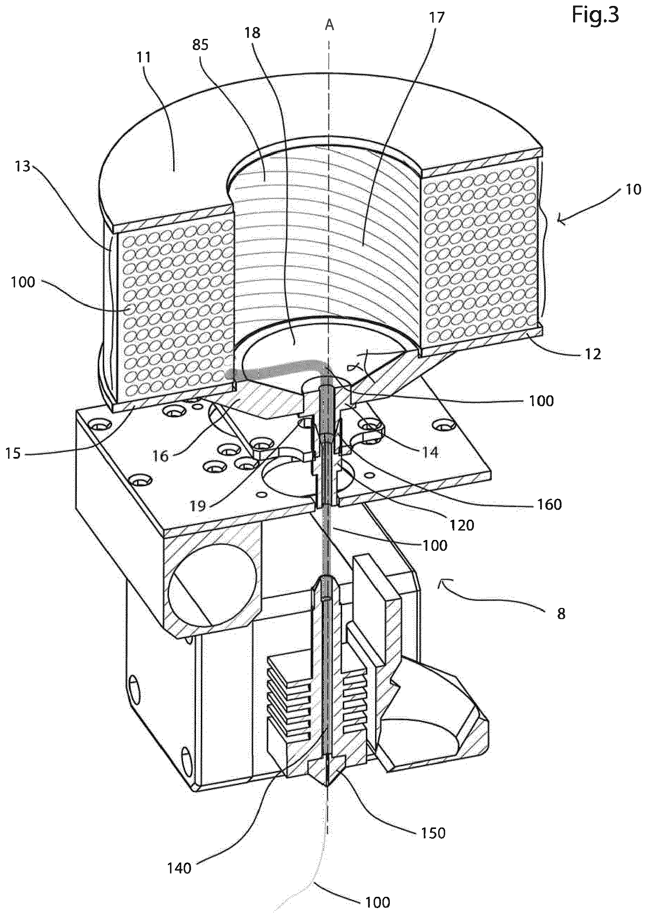

A coil 10 according to the present invention, in particular obtained according to the above-described method, is represented in figure 2. Since it is particularly designed for being used in combination with devices for three-dimensional printing, such coil 10 is further represented in figure 3 together with an extruding head 8 of a device for three-dimensional printing in additive FFF (Fused Filament Fabrication) technology.

Advantageously, the device 1 operates in additive technology, composing the object to be printed by means of ordered deposition of polymer material at the fused filament physical stage. In particular the device 1 makes use of FFF (Fused Filament Fabrication) technology, since the material to be melted is provided as a filament of carefully calibrated diameter. FFF technology (also termed FDM technology, where FDM stands for Fused Deposition Modeling), for modeling an object, provides for the coordinated use of an extruding head, wherein the material of the filament, after having been dissolved by means of a heating element, is released by means of a nozzle, and an abutment table, possibly heated, on which the object is composed. The coordination between the extruding head and the abutment table is determined by the software that controls the machine path of the 3D printing process, based on a computerized model of the object to be printed. The material used in the printer is typically a polymer material (such as ABS, PLA, ABS ISO, PC, Ultem, PPSF, Polythermid, PA), but it can also be a different material (e.g. fluid-dense material if the device was set for printing food or clay).

A particular characteristic of the coil 10 is that of being configured in a manner such that the unwinding of the filament 100 occurs towards the interior rather than towards the exterior. For such purpose, the coil 10 comprises an upper flange 11 and a lower flange 12, the filament 100 being wound between the two flanges. Outside the filament 100, containing means are arranged which make possible the unrolling of the filament 100 only inside the volume defined by the wound filament 100. The coil 10 is shaped in a manner such that the filament 100 makes a free end 41 available to a user, from which the pulling necessary for the unwinding of the filament 100 may commence.

The containing means are applied between the first flange 12 and the second flange 11 and have the function of preventing the winding of the filament 100 from losing its compactness and preventing as a consequence the increase of the bulk of the coil 10. Furthermore, the containing means confer stability to the structure of the coil 10 during use, hence maintaining the second flange 11 at suitable distance from the first flange 12 until the filament 100 is fully used.

In one embodiment of the present invention, the containing means are made as a sheath 13 capable of containing the bulk of the filament 100, for example a film thermoshrinkable or a vacuum shrinkable film or an adhesive strip. Such sheath 13 can be made of plastic material or of metallic material, for example of non-ferrous metal.

In a different embodiment of the invention, the containing means comprise at least one rigid body, for example at least one casing and/or at least one shell and/or at least one shell portion, preferably at least one half-shell. Once the winding of the filament 100 has completed, such rigid body is applied to the external covering of the filament 100, for the purpose of containing the bulk of the winding. In a further embodiment of the invention, the containing means comprise a flexible body, optionally at least one elastic hook and/or at least one elastic strip and/or at least one elastic sleeve. Also such flexible body is applied to the external covering of the filament 100 once the winding of the filament 100 is completed.

Advantageously the containing means are at least partly made of transparent material, in order to provide the user of the coil 10 the possibility to monitor the available quantity of filament 100. Alternatively, an inspection window is obtained in the containing means in order to allow such monitoring.

Furthermore, the coil 10 can comprise filling means made of insulating material, in particular of thermally insulating material, and interposed between the containing means and the winding. In addition to assisting the containing means in stabilizing the structure of the coil 10, the filling means provide a thermal protection for the filament 100, preventing the filament 100 from being degraded due to external heat (in the particular case of use of a thermoshrinkable sheath 13, from the heat necessary for the sheath 13 to be thermally shrunk). The unwinding of the filament 100 occurs by means of a dispensing conduit 14 integral with the lower flange 12, which can be made of a material different from the rest of the lower flange 12 (for example made of metal, the lower flange 12 being mainly made of plastic). Alternatively, the lower flange 12 can be made in the form of a single body also comprising the dispensing conduit 14. The dispensing conduit 14 has axially symmetric shape and is calibrated as a function of the size of the filament 100 (e.g. the filament 100 can have an external diameter of 1.75 mm or 2.85 mm). In order to enable the exercise of the initial traction force necessary to start the unwinding of the filament 100, the coil 10 is provided with one end of the filament 100 free, outside the dispensing conduit 14. The terminal end of the dispensing conduit 14 can be suitably tapered so as to facilitate the insertion of such end in the connection section of the head 8.

Advantageously the lower flange 12 comprises a peripheral portion 15 and an intermediate portion 16, the intermediate portion 16 being arranged between the peripheral portion 15 and the dispensing conduit 14. While the peripheral portion 15 has a substantially planar extension, so as to be maintained substantially parallel to the upper flange 11, the intermediate portion 16 has a substantially frustoconical extension, such that the intermediate portion 16 is tilted with respect to the peripheral portion 15, in moving away from the upper flange 11. In such a manner, between the volume 17 inside the wound filament 100 and the dispensing conduit 14, an opening volume 18 is created, adapted to facilitate the complete unwinding of the filament 100, preventing the creation of sudden variations of direction in the path of the filament 100 which can subject it to breakage risks due to traction forces. The tilt angle α of the intermediate portion 16 with respect to the peripheral portion 15 is comprised between 10° and 50°, more preferably between 20° and 40°, still more preferably between 25° and 30°.

In order to allow the coil 10 to be supported so as to allow it to rotate around the axis A, the lower flange 12 comprises an abutment surface 19, adapted to allow the coil 10, when in abutment against the head 8, to be maintained in position, and to allow the filament 100 to be unwound due to the rotation of the coil 10 caused by the traction exerted on the filament 100 by the head 8.

By way of example, the abutment surface 19 can be obtained by means of a step variation of the external diameter of the dispensing conduit 14. Such step variation allows obtaining the abutment surface 19 directly on the dispensing conduit 14, the abutment surface 19 being substantially orthogonal to the axis of the dispensing conduit 14 (and consequently to the axis A of the coil 10). If the dispensing conduit 14 is made of metal, there is the advantage of being able to make use of a low friction material, with limited sensitivity to wear phenomena, for the abutment surface 19.

In figure 3, the parts of the head 8 which are traversed by the filament 100 are represented in section. The path of the filament 100 within the printing head 8 starts with the supplying conduit 120 and terminates with the extruding nozzle 150. The supplying conduit 120 has axially symmetric shape and is set for loading the material to be extruded into the head 8, receiving the filament 100 from the coil 10. The filament 100 is then made taut by means of a thread tensioner, usually obtained by means of a gear system, which has the function of suitably tensioning the filament 100, such that it traverses the head 8 with a nearly constant speed (a nearly constant speed of the filament 100 in fact ensures that also the flow of material exiting from the head 8 is constant and hence the deposition is uniform). Downstream of the thread tensioner, there is then the melting of the material of the filament 100 which occurs inside a melting chamber 140, by means of the heat provided by a heating element. Finally, the nozzle 150 releases the fused material. The diameter of the nozzle 150 is accurately calibrated and is generally comprised between 0.2 mm and 0.3 mm.

A particular characteristic of the head 8 is that of comprising a supporting surface 160, arranged peripherally with respect to the supplying conduit 120 and set to directly support the coil 10, when in contact with the abutment surface 19 of the coil 10. In addition to allowing the coil 10 to be maintained in position, the interfacing between the supporting surface 160 of the head 8 and the abutment surface 19 of the coil 10 is such to allow the coil 10 to be free to rotate around the axis A during the 3D printing process, allowing the unwinding of the filament 100 which can thus be extruded.

From the present description and from the accompanying figures, it is clear that the present invention attains all the previously listed objects and attains numerous important advantages.

First of all, the present invention allows producing a coil in a quick, inexpensive and reliable manner. Secondly, the shape of the coil according to the present invention enables the unwinding of the filament inside the winding, allowing the considerable improvement of the architecture of the three-dimensional printing devices.

Not just with regard to the structure (and consequently also the cost), the three-dimensional printing device is also considerably simplified regarding the control. This since - given that the coil follows the movements of the printing head - it is no longer necessary to manage the difficulty of regulating the traction force of the filament as a function of the head position. The supply of the filament to the head is nearly constant, as well as optimized in order to obtain the desired travel speed of extruded material. In addition, the direct coupling between the coil according to the present invention and the three-dimensional printing device according to the present invention lowers to a minimum the risks of breakage, working hardening, tearing and jamming of the filament and significantly contributes to simplifying the operations of maintenance and/or of substitution.

The present invention also brings considerable benefits in terms of bulk reduction. The use of a coil according to the present invention indeed contributes considerably to making a device for three-dimensional printing compact. Such compactness ensures that the device for three-dimensional printing is particularly arranged so as to be versioned as an embedded device, installable for example inside a niche of a modular furniture piece.

In one embodiment of such embedded versioning (reported merely by way of a non-limiting example), the device comprises a support structure, a printing head and an abutment table for the object being printed. The device then comprises an internally hollow casing, adapted to define a cavity for housing the support structure, such casing being associated with fixing means, adapted to allow the installation of the device in a niche. The movement means adapted to move the support table along an axis, in a manner such that the distance of the abutment table from the printing head can be varied during the three-dimensional printing of the object, are advantageously mounted suspended on the support structure, while the movement means adapted to move the printing head (and together therewith, also the coil according to the present invention) within a plane substantially parallel to the abutment table, are advantageously constrained to the support structure.

The invention has been described with reference to one embodiment reported by way of a non-limiting example. Nevertheless, it is clear to the man skilled in the art that numerous variants of the invention are possible, such variants falling within the protective scope of the following claims.

## Claims

1. Coil (10) comprising:
- a first flange (12);
- a second flange (11) suitably spaced from said first flange (12) and
- a filament (100) wound between said first flange (12) and said second flange (11),
**characterized in that** it further comprises containing means applied between said first flange (12) and said second flange (13) and arranged outside the winding of said filament (100), in a manner such that said filament (100) can be unrolled inside said winding.

2. Coil (10) according to claim 1, wherein said containing means comprise a sheath (13) and/or a strip and/or a film, said sheath (13) and/or strip and/or film being made of thermoshrinkable material or of vacuum shrinkable material or of adhesive material and/or wherein said containing means comprise a rigid body, optionally at least one casing and/or at least one shell and/or at least one shell portion, preferably at least one half-shell, and/or wherein said containing means comprise a flexible body, optionally at least one elastic hook and/or at least one elastic strip and/or at least one elastic sleeve.

3. Coil (10) according to claim 1 or claim 2, wherein said containing means are in direct contact with said winding or wherein filling means are interposed between said containing means and said winding, optionally said filling means being made of insulating material, in particular made of thermally insulating material.

4. Coil (10) according to any one of the preceding claims, wherein said first flange (12) comprises a dispensing conduit (14) adapted to be traversed by said filament (100) during the unrolling of said filament (100), wherein said first flange (12) comprises in particular an abutment surface (19), adapted to allow said coil (10), when used in combination with a device for three-dimensional printing, to be maintained in position and to rotate around the axis (A) thereof during the unrolling of said filament (100), said abutment surface (19) preferably being obtained on said dispensing conduit (14) and being substantially orthogonal to the axis of said dispensing conduit (14).

5. Coil (10) according to claim 4, wherein said first flange (12) comprises a first portion (15) and a second portion (16), said second portion (16) being interposed between said first portion (15) and said dispensing conduit (14), said first portion (15) being substantially parallel to said second flange (11) and said second portion (16) being tilted with respect to said first portion (15) in moving away from said second flange (11).

6. Coil (10) according to claim 5, the tilt angle (α) of said second portion (16) with respect to said first portion (15) being comprised between 10° and 50°, more preferably between 20° and 40°, still more preferably between 25° and 30°.

7. Coil (10) according to any one of the claims 4 to 6, wherein said dispensing conduit (14) is made of a material different from said first portion (15) and/or from said second portion (16), preferably made of metallic material.

8. Coil (10) according to claim 5 or claim 6, wherein said dispensing conduit (14) is made in a single body with said first portion (15) and with said second portion (16).

9. Coil (10) according to any one of the preceding claims, **characterized in that** it is configured for being used for the three-dimensional printing of objects, in particular according to the additive FFF (Fused Filament Fabrication) technology.

10. System comprising:
- a coil (10) according to claim 9 and
- a device for the three-dimensional printing of objects, said device operating in particular according to the additive FFF (Fused Filament Fabrication) technology, said device being equipped with a printing head (8) comprising a supplying conduit (120) adapted to receive said filament (100),
**characterized in that** said printing head (8) further comprises a supporting surface (160), adapted to allow said coil (10) to be maintained in position and to rotate around the axis (A) thereof during the extrusion of said filament (100).

11. Method for producing a coil (10), said coil (10) being in particular configured for being used for the three-dimensional printing of objects in additive FFF (Fused Filament Fabrication) technology, said method comprising the steps of:
i) arranging a first flange (12) at a predetermined distance (D) from a second flange (11);
ii) inserting a core (77) between said first flange (12) and said second flange (11);
iii) winding a filament (100) around said core (77), in order to form a winding of said filament (100) between said first flange (12) and said second flange (11);
iv) applying containing means between said first flange (12) and said second flange (11), so that said filament (100) remains interposed between said core (77) and said containing means, and
v) removing said core (77) between said first flange (12) and said second flange (11).

12. Method according to claim 11, wherein, in said step iv), said containing means are applied in direct contact with said winding.

13. Method according to claim 11, wherein said step iv) is preceded by the step of applying filling means outside said winding, optionally said filling means being made of insulating material, in particular of thermally insulating material, and wherein, in said step iv), said containing means are applied outside said filling means, in a manner such that said filling means remain interposed between said containing means and said winding.

14. Method according to any one of the claims 11 to 13, wherein said first flange (12) comprises a dispensing conduit (14), the winding of said filament (100) in said step iii) being preceded by the insertion of an end of said filament (100) in said dispensing conduit (14), so that said filament (100) can be unwound by pulling said end once said step v) has terminated.

15. Method according to any one of the claims 11 to 14, wherein said second flange (11) comprises an opening (85), the insertion of said core (77) in said step ii) and the removal of said core (77) in said step v) occurring through said opening (85).
